(19) Europäisches Patentamt

European Patent Office

Office européen des brevets

(11) EP 0 696 555 B1

(12) **EUROPÄISCHE PATENTSCHRIFT**

(45) Veröffentlichungstag und Bekanntmachung des Hinweises auf die Patenterteilung:
**07.05.1997 Patentblatt 1997/19**

(51) Int. Cl.[6]: **C03C 4/02**, C03C 4/00, C03C 1/10, C03C 3/091

(21) Anmeldenummer: 95110548.5

(22) Anmeldetag: **06.07.1995**

(54) **Gefärbtes Borosilikatglas und dessen Verwendung**

Colored borosilicate glass and its use

Verre borosilicaté coloré et son application

(84) Benannte Vertragsstaaten:
**AT CH DE FR GB IT LI**

(30) Priorität: **10.08.1994 DE 4428234**

(43) Veröffentlichungstag der Anmeldung:
**14.02.1996 Patentblatt 1996/07**

(73) Patentinhaber: **JENAer GLASWERK GmbH**
**D-07745 Jena (DE)**

(72) Erfinder:
• **Kloss, Thomas**
  **D-07743 Jena (DE)**
• **Watzke, Eckhardt**
  **D-07749 Jena (DE)**

(56) Entgegenhaltungen:
**US-A- 1 830 902**

• **CHEMICAL ABSTRACTS, vol. 116, no. 2, 13.Januar 1992 Columbus, Ohio, US; abstract no. 10309k, Seite 232;**
• **CHEMICAL ABSTRACTS, vol. 119, no. 8, 23.August 1993 Columbus, Ohio, US; abstract no. 78121k, H.J. POHL 'absorption mechanisms of real glasses in the uv-region, the deep uv region with new optical glasses, and...' Seite 367;**
• **W.A. WEYL 'coloured glasses' 1959 , SOCIETY OF GLASS TECHNOLOGY , SHEFFIELD 12 * Seite 212 - Seite 217 ***
• **CHEMICAL ABSTRACTS, vol. 104, no. 16, 21.April 1986 Columbus, Ohio, US; abstract no. 134720, Seite 297;**
• **DATABASE WPI Week 07 Derwent Publications Ltd., London, GB; AN 84-040298 & JP-A-59 003 043 (SHOEI KOGYO YG) , 9.Januar 1984**

## Beschreibung

Die Erfindung betrifft ein mit $Ti^{3+}$-Ionen bläulich, blau bis schwarz gefärbtes Borosilikatglas , das im NIR-Bereich eine geringe Transmission besitzt, mit der Zusammensetzung $SiO_2 > 78$; $B_2O_3 > 8$; $Al_2O_3$ 1,5 - 4; Alkalioxide > 2.

Auf Grund ihrer besonderen Absoprtions-Transmissionscharakteristik eignen sich die erfindungsgemäßen Gläser für ästhetische Anwendungen z. B. als Hauswirtschaftsglas, für die Herstellung von Filtern oder, wenn die Lichtdurchlässigkeit im NIR gering genug ist, als Absorber in der Solartechnik.

Das Färben von Glas mit dreiwertigen Titanionen ist bekannt.

$[Ti'''O_6]$ färbt das Glas z. B. violett oder braun (H. Scholze: Glas, S. 219, Springer Verlag 1988). In Abhängigkeit von der Glaszusammensetzung und den Schmelzbedingungen treten Absorptionsbanden im Bereich von ca. 400 bis 800 nm auf.

Es ist auch bekannt, daß $Ti^{3+}$-Ionen z. B. in Silikatgläsern nur schwer zu stabilisieren sind. (George H. Sigel: Optical Absorption of Glasses, P. 38, TREATISE ON MATERIALS SCIENCE AND TECHNOLOGY, Vol. 12, ACADEMIC PRESS, 1977).

Wenn als Reduktionsmittel Kohlenstoff oder kohlenstoffhaltige Verbindungen verwendet werden, ist mit großem und ungleichmäßigem Abbrand zu rechnen, so daß die Farbe des Glases nur schwer zu reproduzieren ist.

Wenn als Reduktionsmittel Metalle oder Metalloxide zum Einsatz kommen, werden diese als Oxide im Glas eingebaut, so daß sich bestimmte Glaseigenschaften in unerwünschter Weise, z. B. durch eine Erhöhung der Wärmedehnung ändern oder zusätzliche Farbeffekte auftreten können.

Außerdem ist es u. U. notwendig, die Ofenatmosphäre stärker reduzierend einzustellen, um die Reoxidation von $Ti^{3+}$-Ionen zu nichtfärbenden $Ti^{4+}$-Ionen zu verhindern. Bei hochschmelzenden Gläsern - z. B. bei Borosilikatgläsern - können dadurch Probleme beim Einstellen der notwendigen hohen Temperaturen entstehen.

Es ist weiterhin bekannt, Glas mit Kobaltverbindungen blau zu färben. Da Schwermetalle jedoch toxische Wirkungen haben können, wenn das Glas chemischem Angriff ausgesetzt ist und gelöste Komponenten z. B. in das Trinkwasser gelangen können, muß die Verwendung von Kobaltverbindungen ausgeschlossen werden. Kobaltgefärbtes Borosilikatglas besitzt außerdem keine bzw. keine ausreichende NIR-Absorption.

Aufgabe der Erfindung ist es, Borosilikatgläser schon in geringen Schichtdicken von einigen Millimetern grau, bläulich, blau bis schwarz zu färben und gleichzeitig eine geringe NIR-Transmission zu erreichen.

Die Aufgabe wurde nach der vorliegenden Erfindung dadurch gelöst, daß die Glassynthese-Zusammensetzung gleichzeitig 0,1 bis 3 Ma.-% $TiO_2$ und als Reduktionsmittel 0,01 bis 0,1 Ma.-% $Si°$ enthält.

Es wurde gefunden, daß man offensichtlich dreiwertiges Titan in alkaliarmes Borosilikatglas stabil einbauen kann, wenn man gleichzeitig mit der Komponente $TiO_2$ als geeignetes Reduktionsmittel "metallisches Silizium" in definierter Menge in das Gemenge einführt.

In bevorzugten Ausführungsformen enthält das gefärbte Borosilikatglas nach der Erfindung (in Ma.-% auf Oxidbasis) 78-81 $SiO_2$; 12-13 $B_2O_3$; 2-4 $Al_2O_3$; 0-2 $Li_2O$; 0-3 $Na_2O$; 0-3 $K_2O$; 0,1-3 $TiO_2$ und 0,01-0,1 Si(met.) oder 78-80 $SiO_2$; 12-13 $B_2O_3$; 2-4 $Al_2O_3$; 1-2 $Li_2O$; 0-1,5 $Na_2O$; 1-3 $K_2O$; 0,5-2,5 $TiO_2$ und 0,02-0,07 Si(met.), bei einer Wärmeausdehnung von $\alpha_{20/300} \leq 3,3 \times 10^{-6} K^{-1}$.

Kleine Zusätze von $TiO_2$ und Si (met.) (0,1 bis 0,5 Gew.-% $TiO_2$ bzw. 0.01 bis 0,02 % Si (met.) verleihen dem Glas dabei eine leicht graue bis bläuliche Färbung. Bei Verwendung von 0,5 bis 2,0 Gew.-% $TiO_2$ und 0,02 bis 0,05 Gew.-% Si(met.) ist das Glas blau bis intensiv blau gefärbt; die NIR Absorption nimmt dabei stark zu. Setzt man dem Gemenge noch größere Mengen von $TiO_2$ und Si(met.) zu, ist das Glas schwarz und gleichzeitig im UV-, VIS- und NIR-Bereich völlig undurchlässig.

Bei Zusatz von mehr als 3 Gew.-% $TiO_2$ beginnen sich Glas- und Kristallisationseigenschaften aber negativ zu verändern.

Im folgenden wird die Erfindung an einem Ausführungsbeispiel und einer Figur näher erläutert:

Zur Demonstration der erfindungsgemäßen Blaufärbung von alkaliarmen Borosilikatglas wurde folgende Glaszusammensetzung erschmolzen:

| Oxide | | Rohstoffe |
|---|---|---|
| $SiO_2$ | 78,50 Gew.-% | $SiO_2$ |
| $B_2O_3$ | 12,50 Gew.-% | $H_3BO_3$ |
| $Al_2O_3$ | 2,50 Gew.-% | $Al(OH)_3$ |
| $Li_2O$ | 1,50 Gew.-% | $Li_2CO_3$ |
| $Na_2O$ | 1,00 Gew.-% | NaCl |
| $K_2O$ | 2,00 Gew.-% | $K_2CO_3$ |
| $TiO_2$ | 2,00 Gew.-% | $TiO_2$ |
| Si(met.) | 0,03 Gew.-% | Si°, metallisch |
| | 100,03 Gew.-% | |

Als Glaskomponenten wurden die in der Tabelle aufgeführten Rohstoffe für die Gemengebereitung verwendet. Oxidierende Rohstoffe, wie z. B. Nitrate, wurden nicht eingesetzt. Das $Na_2O$ wurde als NaCl zur Läuterung in das Gemenge eingeführt.

Die Schmelze wurde im elektrisch beheizten Laborofen an Luftatmosphäre im Quarztiegel bei ca. 1600 °C im Zeitraum von ca. 5 Stunden durchgeführt. Nachdem die Schmelze mittels eines Quarzrührers homogenisiert worden war, wurde sie in eine Eisenform gegossen und spannungsfrei gekühlt.

Die Wärmedehnung dieses Glases beträgt $\alpha_{20/300}$ = 3,2 x $10^{-6}$K$^{-1}$, die Transformationstemperatur $T_g$ = 470°C.

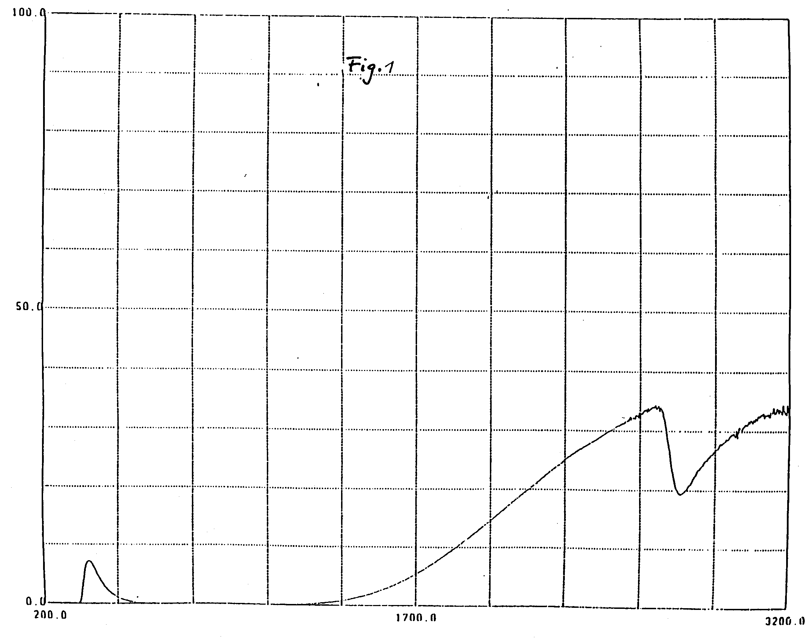

Die Figur zeigt die Transmissionskurve des Ausführungsbeispiels im Wellenlängenbereich von 200 bis 3200 nm. Die Dicke der Meßprobe beträgt 1 mm. Das Glas besitzt bei einer Dicke von einigen Millimetern eine intensiv blaue, sehr ästhetische Färbung, so daß es z. B. vorteilhaft als Hauswirtschaftsglas oder für andere dekorative Zwecke verwendet werden kann.

Die Transmissionskurve zeigt außerdem, daß die Absorption im Bereich der Sonnenstrahlungsenergie so groß ist, daß das Glas auch als Solarabsorber verwendet werden kann, auch wenn das Glas im VIS nicht völlig undurchsichtig, und dadurch besser zu handhaben, ist.
Ein weiterer, zusätzlicher Vorteil des erfindungsgemäßen Glases gegenüber dem standardisierten "Borosilicatglas 3.3" wird darin gesehen, daß die Viskositäten erniedrigt werden konnten. Das Glas läßt sich leichter und kostengünstiger schmelzen und verarbeiten. Auch die Wärmedehnung wurde überraschenderweise weiter erniedrigt.

**Patentansprüche**

1. Gefärbtes Borosilikatglas, mit einer abstufbaren Transmission im NIR- Bereich, der Synthese-Zusammensetzung (in Ma.-% auf Oxidbasis) SiO$_2$ > 78; B$_2$O$_3$ > 8; Al$_2$O$_3$ 1,5 - 4; Alkalioxide > 2, dadurch gekennzeichnet, daß die Glassynthese-Zusammensetzung 0,1 - 3,0 Ma.-% TiO$_2$ und 0,01 - 0,1 Ma.-% metallisches Silicium als Reduktionsmittel enthält.

2. Gefärbtes Borosilikatglas nach Anspruch 1, gekennzeichnet durch die Synthese-Zusammensetzung (in Ma.-% auf Oxidbasis):

| | |
|---|---|
| SiO$_2$ | 78 - 81 |
| B$_2$O$_3$ | 12 - 13 |
| Al$_2$O$_3$ | 2 - 4 |
| Li$_2$O | 0 - 2 |
| Na$_2$O | 0 - 3 |
| K$_2$O | 0 - 3 |
| TiO$_2$ | 0,1 - 3 |
| Si(met.) | 0,01 - 0,1 |

3. Gefärbtes Borosilikatglas nach Anspruch 1, gekennzeichnet durch die Synthese-Zusammensetzung (in Ma.-% auf Oxidbasis):

| | |
|---|---|
| SiO$_2$ | 78 - 80 |
| B$_2$O$_3$ | 12 - 13 |
| Al$_2$O$_3$ | 2 - 4 |
| Li$_2$O | 1 - 2 |
| Na$_2$O | 0 - 1,5 |
| K$_2$O | 1 - 3 |
| TiO$_2$ | 0,5 - 2,5 |
| Si(met.) | 0.02 - 0,07 |

und eine Wärmeausdehnung von $\alpha_{20/300} \leq 3.3$ x $10^{-6}$ K$^{-1}$.

4. Verwendung eines von grau, bläulich, blau bis schwarz gefärbten Borosilikatglases nach den Ansprüchen 1 bis 3,
als Filterglas, als Absorber in der Solartechnik, als Hauswirtschaftsglas und/ oder als ästhetisches Farbglas im Bau- und Dekorationsbereich.

**Claims**

1. Coloured borosilicate glass having a gradable transmittance in the near infrared range and the synthesis composition (as wt-% based on oxide) SiO$_2$ > 78; B$_2$O$_3$ > 8; Al$_2$O$_3$ 1.5 - 4; alkali metal oxides > 2,
characterised in that
the glass synthesis composition contains 0.1 - 3.0 wt-% TiO$_2$ and 0.01 - 0.1 wt-% metallic silicon as a reducing agent.

2. Coloured borosilicate glass according to Claim 1, characterised by the synthesis composition (as wt-% based on oxide):

| | |
|---|---|
| SiO$_2$ | 78 - 81 |
| B$_2$O$_3$ | 12 - 13 |
| Al$_2$O$_3$ | 2 - 4 |
| LiO$_2$ | 0 - 2 |
| Na$_2$O | 0 - 3 |
| K$_2$O | 0 - 3 |
| TiO$_2$ | 0.1 - 3 |
| Si (metallic) | 0.01 - 0.1 |

**3.** Coloured borosilicate glass according to Claim 1, characterised by the synthesis composition (as wt-% based on oxide):

| SiO$_2$ | 78 - 80 |
|---|---|
| B$_2$O$_3$ | 12 - 13 |
| Al$_2$O$_3$ | 2 - 4 |
| LiO$_2$ | 1 - 2 |
| Na$_2$O | 0 - 1.5 |
| K$_2$O | 1 - 3 |
| TiO$_2$ | 0.5 - 2.5 |
| Si (metallic) | 0.02 - 0.07 |

and a coefficient of thermal expansion of $\alpha_{20/300} \leq 3.3 \times 10^{-6}/K$.

**4.** Use of a borosilicate glass which is coloured from grey, bluish, blue to black, according to Claims 1 to 3,
as a filtering glass, an absorber in solar technology, a household glass and/or an aesthetic coloured glass in the construction and decoration sector.

**Revendications**

**1.** Verre borosilicaté coloré, doté d'une transmission réglable dans le domaine infrarouge proche et ayant pour composition de synthèse (en % de matière par rapport aux oxydes) SiO$_2$ > 78; B$_2$O$_3$ > 8; Al$_2$O$_3$ 1,5 — 4; oxydes alcalins > 2, caractérisé par le fait que la composition de synthèse du verte comprend 0,1 — 3,0 % de matière TiO$_2$ et 0,01 - 0,1 % de matière silicium métallique en tant qu'agent réducteur.

**2.** Verte borosilicaté coloré selon la revendication 1, caractérisé par la composition dc synthèse (en % de matière par rapport aux oxydes)

| SiO$_2$ | 78 - 81 |
|---|---|
| B$_2$O$_3$ | 12 - 13 |
| Al$_2$O$_3$ | 2 - 4 |
| Li$_2$O | 0 - 2 |
| Na$_2$O | 0 - 3 |
| K$_2$O | 0 - 3 |
| TiO$_2$ | 0,1 - 3 |
| Si (métal.) | 0,01 - 0,1 |

**3.** Verte borosilicaté coloré selon la revendication 1, caractérisé par la composition de synthèse (en % de matière par rapport aux oxydes)

| SiO$_2$ | 78 - 80 |
|---|---|
| B$_2$O$_3$ | 12 - 13 |
| Al$_2$O$_3$ | 2 - 4 |
| Li$_2$O | 1 - 2 |
| Na$_2$O | 0 - 1,5 |
| K$_2$O | 1 - 3 |
| TiO$_2$ | 0,5 - 2,5 |
| Si (métal.) | 0,02 - 0,07 |

et une dilatation thermique de $\alpha$ 20/300 $\leq$ 3,3 * 10.6 K$^{-1}$.

**4.** Utilisation d'un verre borosilicaté coloré gris, bleuté, bleu à noir selon les revendications 1 à 3, comme verre à filtres, comme absorbeur dans les techniques solaires, comme verre ménager et/ou comme verre coloré esthétique dans le domaine de la construction et de la décoration.

Fig.1

EP 0 696 555 B1